# EUROPEAN PATENT SPECIFICATION

(11) **EP 1 941 089 B1**
(45) Date of publication and mention of the grant of the patent: **04.04.2012**
(21) Application number: 06815029.1
(22) Date of filing: 19.09.2006
(51) Int. Cl.: D03D 15/00

(54) **MOLDABLE FABRIC WITH VARIABLE CONSTITUENTS**
FORMBARER STOFF MIT UNTERSCHIEDLICHEN BESTANDTEILEN
TISSU MOULABLE À CONSTITUANTS VARIABLES

(30) Priority: 27.09.2005 US 720824 P; 11.09.2006 US 518964
(43) Date of publication of application: 09.07.2008
(73) Proprietor: Milliken & Company, Spartanburg, SC 29303 (US)
(72) Inventor: ELEAZER, Howell, B., Moore, SC 29369 (US); PESTRIDGE, Charles, W., Lagrange, SC 30240 (US); HAYES, Heather, J., Chesnee, SC 29323 (US); GRUENBERG, Karl, M., Spartanburg, SC 29307 (US)
(74) Representative: HOFFMANN EITLE
(86) International application number: PCT/US2006/036650
(87) International publication number: WO 2007/038137

(56) References cited:
- EP-A- 0 872 586
- EP-A1- 0 344 318
- WO-A-98/12370
- WO-A-98/12371
- GB-A- 1 387 701
- JP-A- 7 300 763
- US-A1- 2005 003 727

## Description

### TECHNICAL FIELD

This invention relates to a thermo-moldable composite material like the one known from GB-A-1 387 701, upon which the preambles of claims 1 and 7 are based. More particularly, the invention relates to thermoplastic composite material of woven construction incorporating a percentage of fusible tape elements. The woven construction incorporates selected weft and/or warp elements of predefined character for use in combination with the fusible tape elements to impart desired properties across the structure. Methods of forming the composite material are also described.

### BACKGROUND OF THE INVENTION

It has been proposed to form tape structures from polypropylene film coated with a layer of propylene copolymer including ethylene units such that the coating has a lower softening point than the core. Such tape structures are disclosed, for example, in U.S. Patent 5,578,370. U.S. Patent Application 2004/0242103A1 has also proposed to form monoaxially drawn tape structures characterized by substantial draw ratios and incorporating a central layer of a polyolefin with one or two covering layers of a polyolefin from the same class as the central layer. The DSC melting point of the outer layers is lower than that of the central layer to facilitate heat bonding. Such drawn tape elements may be interwoven so as to form a mat structure which is then subjected to heat thereby fusing the tape elements in place. Multiple layers of such interwoven mat structures may be combined to form moldable structures of substantial thickness that may be shaped into three-dimensional configurations.

While the moldable mat structures of the prior art are highly useful for a number of end uses, the past constructions are generally not susceptible to strong bonding to underlying substrates such as adhesives, foams, rubbers and the like. In some applications it may be desirable to bond such structures to underlying substrate structures. Accordingly, the need exists to provide a system that facilitates bonding to such substrates while nonetheless maintaining the desirable features of moldability provided by prior mat structures. There also exists a need for a moldable mat structure with increased physical properties, such as strength.

### SUMMARY OF THE INVENTION

The present invention is defined in claims 1 and 7 below. The dependent claims are directed to optional and preferred features.

The present invention provides advantages and/or alternatives over the prior art by providing a composite construction incorporating one or more mat layers of axially drawn tape fiber elements running in the warp direction and/or weft direction interwoven with a plurality of elements of different character running in the weft and/or warp direction.

### BRIEF DESCRIPTION OF THE DRAWINGS

The accompanying drawings which are incorporated in and which constitute a part of this specification illustrate several exemplary constructions and procedures in accordance with the present invention and, together with the general description of the invention given above and the detailed description set forth below, serve to explain the principles of the invention wherein:

FIG. 1 illustrates schematically a cross-section of the multilayer film;

FIG. 2 illustrates schematically a fabric woven from drawn strips of the multilayer film;

FIG. 3 illustrates schematically a process for forming a fabric woven from drawn strips of the multilayer film; and

FIG. 4 illustrates an arrangement of fabric layers arranged in stacked relation for heated compression molding.

### DESCRIPTION OF THE PREFERRED EMBODIMENT

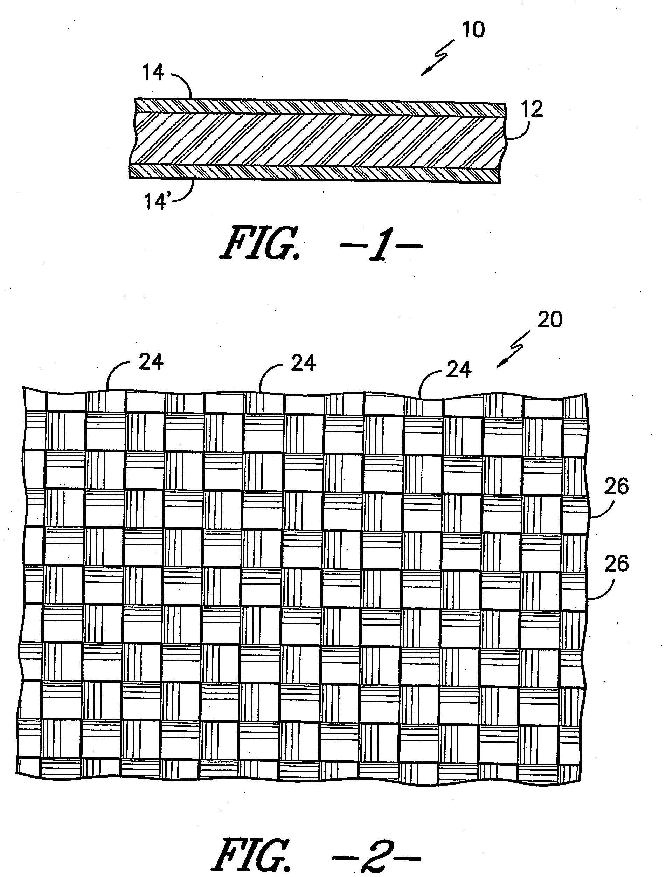

Exemplary embodiments of the present invention will now be described by reference to the accompanying drawings, in which, to the extent possible, like reference numerals are used to designate like components in the various views. Turning now to the drawings, FIG. 1 depicts an exemplary construction of multilayer polymeric film 10 made up of a core layer 12 disposed between surface layers 14, 14'. Alternatively, it is contemplated that only a single surface layer may be present, thereby resulting in a construction of a core layer 10 being adjacent to surface layer 14. The film 10 may be formed by any conventional means of extruding such multilayer polymeric films. By way of example, and not limitation, the film 10 may be formed by blown film or cast film extrusion. The film 10 is then cut into a multiplicity of longitudinal strips of a desired width by slitting the film 10 to yield tapes having cross-sections in the thickness dimension as shown in FIG. 1. The strips of film 10 are then drawn in order to increase the orientation of the core layer 10 so as to provide increased strength and stiffness of the material.

It is contemplated that the core layer 12 of the film 10 is preferably made up of a molecularly-oriented thermoplastic polymer. The core layer 12 is compatibly bonded to each of surface layers 14, 14' between their contiguous surfaces. It is further contemplated that the surface layers 14, 14' have a softening temperature, or melting temperature, lower than that of the core layer 12. By way of example only, it is contemplated that the core layer 12 is a polyolefin polymer such as polypropylene, polyethylene. According to one potentially preferred practice, the core layer 12 may be polypropylene or polyethylene. The core layer 12 may account for about 50-99 wt. % of the film 10, while the surface layers 14, 14' account for about 1-50 wt. % of the film 10. The core layer 12 and surface layers 14, 14' being made up of the same class of materials to provide an advantage with regard to recycling, as the core layer 12 may include production scrap.

In an embodiment with a core layer 12 of polypropylene, the material of surface layers 14, 14' is preferably a copolymer of propylene and ethylene or an α-olefin. Particularly advantageous results have been achieved by using a random copolymer of propylene-ethylene. It may be preferred to use said copolymer with an ethylene content of about 1-25 mol. %, and a propylene content of about 75-99 mol. %. It may be further preferred to use said copolymer with a ratio of about 95 mol. % propylene to about 5 mol. % ethylene. Instead of said copolymer or in combination therewith, a polyolefin, preferably a polypropylene homopolymer or polypropylene copolymer, prepared with a metallocene catalyst, may be used for the surface layers 14, 14'. It is also contemplated that materials such as (poly-4-methyl-1-pentene) (PMP) and polyethylene may be useful as a blend with such copolymers in the surface layers 14, 14'. The surface layer material should be selected such that the softening point of the surface layer 14, 14' is at least about 10°C lower than that of the core layer 12, and preferably between about 15-40°C lower. The upper limit of this difference is not thought to be critical, and the difference in softening points is typically less than 70°C.

As mentioned above, the film 10 may be cut into a multiplicity of longitudinal strips of a desired width by slitting the film 10 in a direction transverse to the layered orientation of core layer 12 and surface layers 14, 14'. The strips of film 10 are then drawn in order to increase the orientation of the core layer 10 so as to provide increased strength and stiffness to the material. After the drawing process is complete, the resulting strips are in the range of about 1.5 to about 5 millimeters wide.

By way of example only, and not limitation, one tape film material that may be particularly useful is believed to be marketed under the trade designation PURE by Lankhorst / Indutech having a place of business in Sneek, The Netherlands.

FIG. 2 illustrates a mat fabric 20 woven from strips of the film 10. As will be appreciated, the mat fabric 20 may be utilized to form a multilayered composite structure. As illustrated, the mat fabric 20 preferably includes a multiplicity of warp strips 24 of film 10 running in the warp direction of the mat fabric 20. The warp strips 24 are interwoven with fill strips 26 of selected material running in the fill direction in transverse relation to the warp strips 24. As shown, the fill strips 26 are interwoven with the warp strips 24 such that a given fill strip extends in a predefined crossing pattern above and below the warp strips 24. In the illustrated arrangement, the fill strips 26 and the warp strips 24 are formed into a so called plain weave wherein each fill strip 26 passes over a warp strip and thereafter passes under the adjacent warp strip in a repeating manner across the full width of the mat fabric 20. However, it is also contemplated that any number of other weave constructions as will be well known to those of skill in the art may likewise be utilized. By way of example only, and not limitation, it is contemplated that the fill strips 26 may pass over two or more adjacent warp strips 24 before transferring to a position below one or more adjacent warp strips thereby forming a so-called twill weave. It is likewise contemplated that the mat may utilize other interwoven constructions including other weave constructions, knit constructions, multiaxial constructions, weft insertion, weft inserted warp knit constructions and the like if desired. Thus, the term "interwoven" is meant to include any construction incorporating interengaging formation strips.

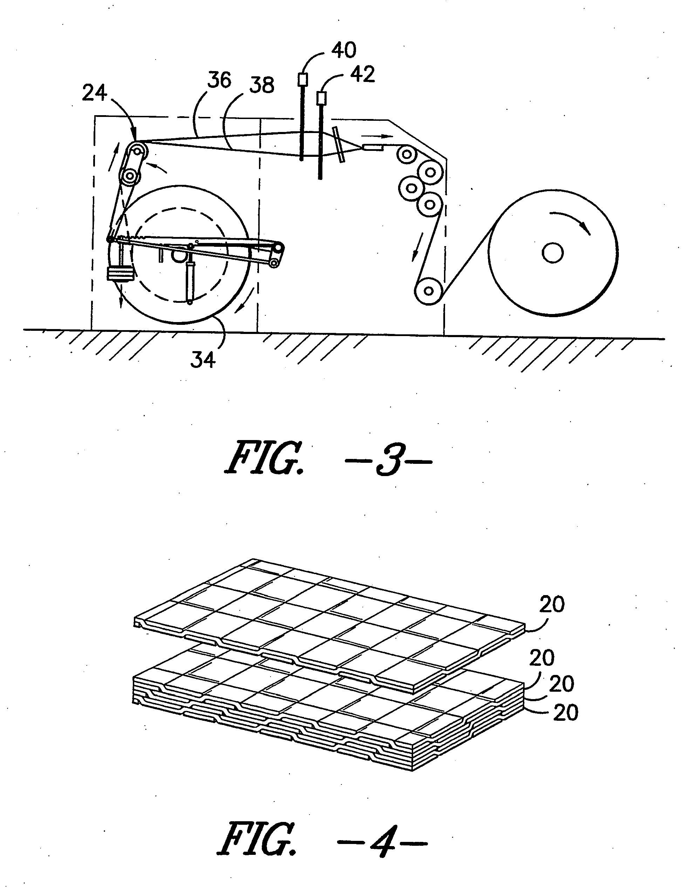

By way of example only, the formation of mat fabric 20 as described may be understood through reference to the simplified schematic in FIG. 3. As illustrated, in the formation process the warp strips 24 of film 10 may be unwound from a beam 34 and separated into two or more sheets 36, 38 for processing. For example, the sheet 36 may be made up of the even numbered warp strips while the sheet 38 may be made up of odd numbered warp strips across the width of the beam. As illustrated, the sheets 36, 38 are threaded through an arrangement of harnesses 40, 42 which may be moved relative to one another to alternate the relative position of the sheets 36, 38, thereby adjusting the shed or spacing between the sheets. As will be appreciated by those of skill in the art, at the weaving machine the fill strips 26 are inserted through the shed between the sheets 36, 38 while the sheets 36, 38 are in spaced relation to one another. As previously indicated, multiple fill strips 26 may be inserted through the shed so as to be side by side in the same orientation relative to the sheets 36, 38. Thereafter, the harnesses 40, 42 may be adjusted so as to reverse the relative position of the sheets 36, 38. Such reversal opens a new shed through which single or multiple fill strips 26 may be inserted before the process is repeated. As will be appreciated, the formation process as described substantially emulates standard weaving processes as are well known to those of skill in the art. Of course, it is to be understood that while the processes in the figures are illustrated as single continuous processing lines, that individual steps or combinations of steps may be carried out at different locations if desired.

In order to securely fuse the warp strips 24 to the fill strips 26 while maintaining the interwoven spatial relation between them, it is contemplated that the warp strips 24 and the fill strips 26 will preferably be heated, under pressure, to a temperature above the softening point of surface layers 14, 14' and below that of the core layer 12. In so doing, the surface layers 14, 14' will melt while the core layer 12 will remain substantially solid and highly oriented. As the mat fabric 20 then cools, the surface layers 14, 14' will fuse together, thereby forming a solid matrix through which is woven the highly oriented, stiff structure of the core layer 12. The overall structure may thereafter be subjected to three-dimensional molding under heat and pressure at temperatures above the softening point of the surface layers 14, 14' so as to yield complex shapes.

As illustrated in FIG. 4, according to one contemplated practice, several layers of mat fabric 20 may be stacked in layered relation prior to the application of heat and pressure in order to form a multilayered woven composite structure. The layers of mat fabric 20 may be formed from a single sheet of fabric that is repeatedly folded over itself, or from several discrete overlaid sheets. Alternatively, a multilayered woven composite may be formed by reheating several previously fused layers of the woven mat fabric. Any of these methods may be employed to form a woven composite with any desired thickness or number of layers.

Consolidation of multiple layers is preferably carried out at suitable temperature and pressure conditions to facilitate both interface bonding fusion and partial migration of the melted surface layer material between the layers. Heated batch or platen presses may be used for multi-layer consolidation. However, it is contemplated that any other suitable press may likewise be used to provide appropriate combinations of temperature and pressure. According to a potentially preferred practice, heating is carried out at a temperature of about 130-160°C and a pressure of about 0.5-70 bar. When exposed to such an elevated temperature and pressure, the surface layers 14, 14' will melt while the core layer 12 will remain substantially solid. Upon cooling, the surface layers 14, 14' will fuse thereby forming a matrix through which the stiff core layers 12 are distributed. According to a potentially preferred practice, cooling is carried out under pressure to a temperature less than about 115°C. It is contemplated that maintaining pressure during the cooling step tends to inhibit shrinkage. Without wishing to be limited to a specific theory, it is believed that higher pressures may facilitate polymer flow at lower temperatures. Thus, at the higher end of the pressure range, (greater than about 20 bar) the processing temperature may be about 90-135°C. Moreover, the need for cooling under pressure may be reduced or eliminated when these lower pressures are utilized.

Due at least in part to the biaxial orientation of the interwoven, highly oriented core layers 12, which are securely held within a matrix of the fused surface layers 14, 14', a composite structure formed from the woven fabric 20 as described will exhibit excellent mechanical strength characteristics in both the planar and normal directions at a low weight. This favorable combination of high strength and low weight makes such a composite suitable for variety of uses. Moreover, such structures are highly adaptable to forced three-dimensional molding procedures at temperatures above the softening point of the surface layers 14, 14'.

According to one contemplated practice, the fill (weft) strips and/or the warp strips of the multilayer polymeric film may be partially replaced by elements of different composition and physical property chosen to impart certain characteristics to the fabric and/or composite. In one embodiment, the replacement elements are of a material with a softening point at least 10°C different than the surface layer(s) of the polymeric strips. In some embodiments, the replacement elements have a higher softening point than the surface layer(s) of the polymeric strips, and in other embodiments, the replacement elements have a lower softening temperature. Preferably, the replacement elements are of a material with a softening point at least 20°C different than the surface layer(s) of the majority warp and/or weft elements. According to the invention, the replacement elements comprise a material with a different chemical composition than the surface layers of the polymeric strips. Having a different chemical composition, in this application, means that materials having a different molecular composition or having the same chemicals at different ratios or concentrations. According to the invention, the replacement elements are non-olefin. In another embodiment, the inserted material may be tape elements, monofilament fiber, or multifilament yarns. By way of example, and not limitation, at least some portion of the weft and/or warp elements of different composition have a different composition elements may be cotton, polyester, nylon, or blends thereof. As a further non-limiting example, some of the weft elements may be an anti-ballistic multifilament yarns such as KEVLAR^{®} or the like. Other nonlimiting examples of anti-ballistic yarns include high tenacity yarns exhibiting greater than 10 grams, more preferably 18 grams, per denier for specific strength, or "tenacity". One high tenacity yarn is an aramid yarn available as Kevlar® from E. I. du Pont de Nemours and Company or Twaron® from Teijin Twaron. The chemical structure is below: 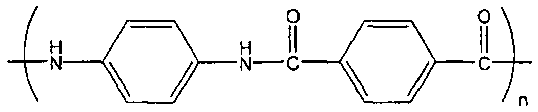 Another high tenacity yarn is a PBO yarn [ poly(p-phenylene-2,6-benzobisoxazole)] available as Zylon® from Toyobo Co.,Ltd. The chemical structure is below: 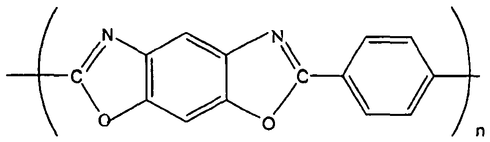 Another high tenacity yarn is a Polyarylate (liquid crystal polymer) available as Vectran® from Kuraray Co., Ltd. The chemical structure is below:

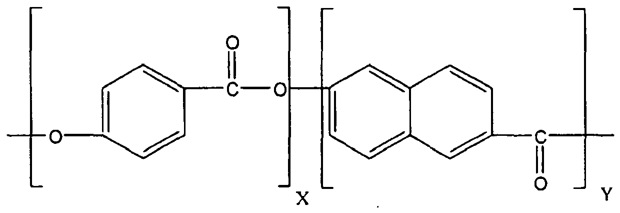

The replacement elements according to the invention are weft elements replacing some or all of the fusible mono-axially drawn tape elements which may be implemented in a manufacturing setup easily. In another embodiment, which is not part of the invention, the fusible mono-axially drawn tape elements warp elements are replaced by inserted elements. In a third embodiment according to the invention, the replacement elements replace some of the fusible mono-axially drawn tape elements in the weft direction. This allows for flexibility of the physical properties of the final composite structure. Preferably, the inserted or replacement material in the warp and/or weft direction is less than 50% by weight of the composite. For the composite to have structural integrity, at least some of the fusible mono-axially drawn tape elements must cross over one another to be able to fuse together.

The inserted material may be tape form or standard cylindrical form or any other weaveable material. The material can have a smooth or a textured surface. Furthermore, any or all of the material can undergo flame retardant (FR) chemical treatment by means well known to those of skill in the art in order to impart flame retardant characteristics uniformly throughout the mat fabric or to discrete zones within the mat fabric. The flame retardant yarns might include those that are non-combustible such as glass, aramid, partially oxidized acrylonitrile, carbon fiber, ceramics and the like. They could also be yarns that are coated, impregnated, or have the following chemical groups incorporated into the structure of the fiber. These FR chemical groups include halogens, antimony, melamine, and phosphorous. In one embodiment, the material used is non-olefin.

The selection of inserted material may be used to control properties of the finished construction. These properties can be uniformly distributed throughout the construction by utilizing the appropriate weft element exclusively. Alternatively, discrete zones of the desired characteristic can be achieved by utilizing the appropriate weft element in a particular area of mat fabric 20 and then changing the nature of the weft element. By way of example and not limitation, according to one contemplated practice, several layers of mat fabric 20 may be stacked in layered relation prior to the application of heat and pressure in order to form a multilayered composite structure. The layers of fabric 20 may be formed from a single sheet of fabric that is repeatedly folded over itself. As can be readily appreciated, if the single sheet contains discrete areas in which different weft elements have been employed, then the multilayered woven composite will also contain discrete zones of differing characteristics depending upon the weft elements. Alternatively, the layers of fabric 20 may be formed from several discrete overlaid sheets. As will be readily apparent, the various layers of mat fabric may contain the same or different weft elements. Furthermore, a multilayered woven composite may be formed by heating, under pressure, several woven composites previously formed from single or multiple layers of mat fabric 20. In one embodiment, 10 or more layers are fused together to form an anti-ballistics panel. Any of these methods may be employed to form a woven composite with any desired thickness or number of layers. Furthermore, the predetermined selection of the material may be used to control properties of the final structure.

As a non-limiting example, it is highly desirable in many different applications to increase the adhesive properties of the composite structure in order to facilitate bonding between the composite and another material or adhesive. One potential way to accomplish this enhanced bonding is by replacing the fill strips in one or more of the outermost fabric mat structures with non-olefin materials such as polyester, nylon and blends thereof. As can be readily appreciated, after heating under pressure, this will result in a multilayered woven composite in which the materials with enhanced bonding capabilities are concentrated in the outermost zones (outer surface) of the composite, thus facilitating bonding to other materials such as polyurethane foams as one non-limiting example.

### EXAMPLES

The invention may be further understood by reference to the following non-limiting examples.

### Example 1

A tie layer was formed by weaving a multiplicity of fusible mono-axially drawn tape elements as previously described having dimensions of 2.2 mm wide and 65 microns thick in the warp direction with alternating picks of the mono-axially drawn tape elements having a denier of 1020 and cotton 2/1 yarn in a twill weave. This tie layer was stacked between 3 layers of Kraft paper (B staged phenolic saturated Kraft paper) and 2 layers of mats woven with the fusible mono-axially drawn tape elements in both the warp and weft. The layers were consolidated by placing in a platen press at 285°F and applying pressure of 450 psi. After 4 minutes, the composite was cooled to 200°F. Subsequently, the pressure was released and the composite removed from the press.

### Control Example 1

A composite was formed from 3 layers of Kraft paper (B staged phenolic saturated Kraft paper) and 3 layers of fabric mat woven with mono-axially drawn tape elements (2.2 mm wide and 60 micron thick) in both the warp and weft directions. No cotton yarns were used. The layers were consolidated by placing in a platen press at 285°F and applying pressure of 450 psi. After 4 minutes, the composite was cooled to 200°F. Subsequently, the pressure was released and the composite was removed from the press.

Peel strength data of the composites produced in accordance with the above examples are delineated in Table 1. Samples were tested using a 1" X 6" sample peeled at 90 degrees (ASTM D5170). The average peel force required to separate the consolidated sheets containing mono-axially drawn tape elements from the Kraft paper is reported.

| SAMPLE | Average Peel (pounds force) |
|---|---|
| Control example 1 | 0.00 |
| Example 1 - Warp direction | 0.27 |
| Example 1 - Weft direction | 0.25 |

### Control Example 2

Control example 2 was formed of mono-axially drawn tape elements (2.2 mm wide and 60 micron thick) as described in the specification in both the warp and weft directions constructed on a Dornier rapier loom. The woven material was constructed using 11 epi x 15ppi. The tape elements had a linear weight of 1020 denier (or 1133dtex). With this construction, the areal weight becomes and 0.024 lb/ft². 10 layers were consolidated as described below.

### Examples 2, 3, and 4

In examples 2, 3, and 4, Twaron®, Zylon®, and Vectran® multifilament yarns were inserted in the filling direction respectively. The woven material was made on the same loom and from the same warp as the 100% tape element samples. The multifilament yarns were inserted in an alternating pattern along with the tape elements. In this way, every other filling yarn was tape yarn with multifilament yarns in between. The specific yarns used were 1500 denier Twaron® with 11 ppi (0.024 lb/ft²), 1000 denier Zylon® with 15ppi (0.024 lb/ft²), and 1500 denier Vectran® with 12ppi (0.024 lb/ft²). The woven material of these 3 materials was designed to have the same areal weight (or areal density) as control example 2, which was 0.024 lb/ft².

The procedure for consolidating the woven fabrics of control examples 2 and examples 2-4 for use in the ball burst tests was as follows:
1. Pre-heat the hot press to 300 °F
2. Assemble 10 layers of woven material with warp directions aligned with each layer
3. Place sample between plates and film
   a) 2 steel plates
   b) 2 sheets of Kapton® film
4. Insert unconsolidated panel between platens
5. Pressurize for 10 minutes at 300psi
   a) Maintain pressure during entire test
6. Turn off heat
7. Turn on water cooling
   a) Maintain pressure during cooling
8. Turn off water when temperature <180°F

Performance testing was carried out using Ball Burst test (ASTM D6797) as a guideline. The test implement was a spherical steel ball with a diameter of 0.6" (15.2mm) and was driven at an incident rate of 20 in/min (508mm/min). Circular samples of 4"(102mm) diameter were rigidly clamped with an unclamped area of diameter 2" (51 mm). Load and displacement were recorded for each sample with results summarized in the following table.

| **Material** | **Weave (epi x ppi)** | **Peak Load (lb)** | **Energy-to-Break (lb-in)** |
|---|---|---|---|
| Control Example 2 | 11x15 | 1358 | 308 |
| Example 2 | 11x11 | 1872 | 576 |
| Example 3 | 11x15 | 1903 | 587 |
| Example 4 | 11x12 | 2261 | 752 |

These test results showed that the samples containing Twaron®, Zylon®, and Vectran® (Examples 2-4) had greater ball burst physical properties than the 100% tape element samples.

While the present invention has been illustrated and described in relation to certain potentially preferred embodiments and practices, it is to be understood that the illustrated and described embodiments and practices are illustrative only and that the present invention is in no event to be limited thereto. Rather, it is fully contemplated that modifications and variations to the present invention will no doubt occur to those of skill in the art upon reading the above description and/or through practice of the invention.

## Claims

1. An interwoven composite comprising a plurality of fused woven layers (20), each woven layer comprising:
a plurality of polyolefin warp elements (24) comprising polymeric strips (10) extending in a first direction, wherein said strips comprise a core layer (12) disposed in layered relation with at least one surface layer (14, 14'), the core layer comprising a first strain oriented polymer composition and having a first softening point, the surface layer comprising a second polymer composition having a softening point lower than the first softening point; and
a plurality of polyolefin weft elements (26) extending transverse to the first direction in interwoven relation to the warp elements,
**characterized in that** the woven layer on an outer surface of the interwoven composite comprises replacement elements replacing a number of the weft elements, wherein the replacement elements comprise non-olefinic materials that have a chemical composition different than the surface layers of the polymeric strips, so as to provide enhanced adhesion capabilities in the outer surface of the composite and, thus, facilitating bonding to other materials.

2. The interwoven composite of claim 1, wherein the replacement elements have a softening point at least 10°C different than the surface layers of the polymeric strips.

3. The interwoven composite of claim 1, wherein the replacement elements comprise cotton yarns.

4. The interwoven composite of claim 1, wherein the replacement elements comprise anti-ballistic multifilament yarns.

5. The interwoven composite of claim 1, wherein the tenacity of the replacement elements is greater than 10 grams per denier.

6. The interwoven composite of claim 1, wherein the interwoven composite comprises less than 50% by weight replacement elements.

7. A interwoven composite comprising a plurality of fused woven layers (20), each woven layer comprising:
a plurality of polyolefin weft elements (26) comprising polymeric strips (10) extending in a first direction, wherein said strips comprise a core layer disposed in layered relation with at least one surface layer, the core layer comprising a first strain oriented polymer composition and having a first softening point, the surface layer comprising a second polymer composition having a softening point lower than the first softening point; and
a plurality of polyolefin warp elements (24) extending transverse to the first direction in interwoven relation to the weft elements,
**characterized in that** the woven layer on an outer surface of the interwoven composite comprises replacement elements replacing a number of the warp elements, wherein the replacement elements comprise non-olefinic materials that have a chemical composition different than the surface layers of the polymeric strips, so as to provide enhanced adhesion capabilities in the outer surface of the composite and, thus, facilitating bonding to other materials.

8. The interwoven composite of claim 7, wherein the replacement elements have a softening point at least 10°C different from the surface layers of the polymeric strips.

9. The interwoven composite of claim 7, wherein the replacement elements are selected from the group consisting of tape elements, monofilament fibers, and multifilament yarns.

10. The interwoven composite of claim 7, wherein the replacement elements comprise anti-ballistic multifilament yarns.

## Patentansprüche

1. Verflochtene Zusammensetzung, umfassend eine Vielzahl an verschmolzenen, gewebten Schichten (20), wobei jede gewebte Schicht, umfasst:
eine Vielzahl an Polyolefin-Kett-Elementen (24), umfassend polymere Streifen (10), die sich in einer ersten Richtung erstrecken, wobei die Streifen eine Kernschicht (12) umfassen, die in einer geschichteten Beziehung in Bezug auf zumindest eine Oberflächenschicht (14, 14') angeordnet ist, wobei die Kernschicht eine erste belastungsorientierte Polymerzusammensetzung umfasst und einen ersten Erweichungspunkt aufweist, wobei die Oberflächenschicht eine zweite Polymerzusammensetzung umfasst, die einen Erweichungspunkt aufweist, der niedriger ist als der erste Erweichungspunkt; und
eine Vielzahl an Polyolefin-Schuss-Elementen (26), die sich quer zu der ersten Richtung in einer verflochtenen Beziehung in Bezug auf die Kettelemente erstreckt;
**dadurch gekennzeichnet, dass**
die gewebte Schicht an einer äußeren Oberfläche der verflochtenen Zusammensetzung Ersatzelemente umfasst, die eine Vielzahl der Kettelemente ersetzen, wobei die Ersatzelemente nicht olefinische Materialien umfassen, die eine chemische Zusammensetzung aufweisen, die sich von den Oberflächenschichten der polymerischen Streifen unterscheidet, um erhöhte Hafteigenschaften in der äußeren Oberfläche der Zusammensetzung aufzuweisen und folglich das Bonden an anderen Materialien zu erleichtern.

2. Verflochtene Zusammensetzung nach Anspruch 1, bei der die Ersatzelemente einen Erweichungspunkt aufweisen, der sich zumindest um 10° C von den Oberflächenschichten der polymerischen Streifen unterscheidet.

3. Verflochtene Zusammensetzung nach Anspruch 1, bei der die Ersatzelemente Baumwollgarne umfassen.

4. Verflochtene Zusammensetzung nach Anspruch 1, bei der die Ersatzelemente anti-ballistische Multifilamentgarne umfassen.

5. Verflochtene Zusammensetzung nach Anspruch 1, bei der die Zähheit der Ersatzelemente größer als 10 Gramm pro Denier ist.

6. Verflochtene Zusammensetzung nach Anspruch 1, bei der die verflochtene Zusammensetzung weniger als 50 Gewichts-% Ersatzelemente aufweist.

7. Verflochtene Zusammensetzung, umfassend eine Vielzahl an verschmolzenen, gewebten Schichten (20), wobei jede gewebte Schicht, umfasst:
eine Vielzahl an Polyolefin-Schuss-Elementen (26), umfassend polymere Streifen (10), die sich in einer ersten Richtung erstrecken, wobei die Streifen eine Kernschicht (12) umfassen, die in einer geschichteten Beziehung in Bezug auf zumindest eine Oberflächenschicht angeordnet ist, wobei die Kernschicht eine erste belastungsorientierte Polymerzusammensetzung umfasst und einen ersten Erweichungspunkt aufweist, wobei die Oberflächenschicht eine zweite Polymerzusammensetzung aufweist, die eine Zusammensetzung mit einem Erweichungspunkt aufweist, der niedriger ist als der erste Erweichungspunkt; und
eine Vielzahl an Polyolefin-Kett-Elementen (24), die sich quer zu der ersten Richtung in einer verflochtenen Beziehung zu den Kettelementen erstrecken,
**dadurch gekennzeichnet, dass**
die gewebte Schicht an einer äußeren Oberfläche der verflochtenen Zusammensetzung Ersatzelemente umfasst, die eine Vielzahl der Schusselemente ersetzt, wobei die Ersatzelemente nicht olefinische Materialien umfassen, die eine chemische Zusammensetzung aufweisen, die sich von der der Oberflächenschichten der polymerischen Streifen unterscheidet, um verbesserte Hafteigenschaften in der äußeren Oberfläche der Zusammensetzung aufzuweisen, um so das Bonden an anderen Materialien zu erleichtern.

8. Verflochtene Zusammensetzung nach Anspruch 7, bei der die Ersatzelemente einen Erweichungspunkt aufweisen, der sich zumindest um 10°C von den Oberflächenschichten der polymeren Streifen unterscheidet.

9. Verflochtene Zusammensetzung nach Anspruch 7, bei der die Ersatzelemente aus der Gruppe bestehend aus Bandelementen, Monofilament-Fasern und Multifilament-Garnen ausgewählt werden.

10. Verflochtene Zusammensetzung nach Anspruch 7, bei der die Ersatzelemente antiballistische Multifillamentgarne umfassen.

## Revendications

1. Composite entrelacé comprenant une pluralité de couches tissées fusionnées (20), chaque couche tissée comprenant :
une pluralité d'éléments de chaîne en polyoléfine (24) comprenant des bandes polymériques (10) s'étendant dans une première direction, dans lesquels lesdites bandes comprennent une couche centrale (12) disposée dans une relation de type couches avec au moins une couche superficielle (14, 14'), la couche centrale comprenant une première composition de polymère dans le sens de la déformation et ayant un premier point de ramollissement, la couche superficielle comprenant une deuxième composition de polymère ayant un point de ramollissement inférieur au premier point de ramollissement ; et
une pluralité d'éléments de trame en polyoléfine (26) s'étendant transversalement à la première direction dans une relation de type entrelacés aux éléments de chaîne,
**caractérisé en ce que** la couche tissée sur une surface extérieure du composite entrelacé comprend des éléments de remplacement remplaçant un certain nombre des éléments de la trame, dans lesquels les éléments de remplacement comprennent des matériaux non oléfiniques qui ont une composition chimique différente de celle des couches superficielles des bandes polymériques, de sorte à fournir des capacités d'adhérence renforcées dans la surface extérieure du composite et, ainsi, faciliter la liaison avec d'autres matériaux.

2. Composite entrelacé selon la revendication 1, dans lequel les éléments de remplacement ont un point de ramollissement différent d'au moins 10°C de celui des couches superficielles des bandes polymériques.

3. Composite entrelacé selon la revendication 1, dans lequel les éléments de remplacement comprennent des fils de coton.

4. Composite entrelacé selon la revendication 1, dans lequel les éléments de remplacement comprennent des fils multifilaments pare-balles.

5. Composite entrelacé selon la revendication 1, dans lequel la ténacité des éléments de remplacement est supérieure à 10 grammes par denier.

6. Composite entrelacé selon la revendication 1, dans lequel le composite entrelacé comprend moins de 50% en poids d'éléments de remplacement.

7. Composite entrelacé comprenant une pluralité de couches tissées fusionnées (20), chaque couche tissée comprenant :
une pluralité d'éléments de trame en polyoléfine (26) comprenant des bandes polymériques (10) s'étendant dans une première direction, dans lesquels lesdites bandes comprennent une couche centrale disposée dans une relation de type couches avec au moins une couche superficielle, la couche centrale comprenant une première composition de polymère dans le sens de déformation et ayant un premier point de ramollissement, la couche superficielle comprenant une deuxième composition de polymère ayant un point de ramollissement inférieur au premier point de ramollissement ; et
une pluralité d'éléments de chaîne en polyoléfine (24) s'étendant transversalement à la première direction dans une relation de type entrelacés aux éléments de trame,
**caractérisé en ce que** la couche tissée sur une surface extérieure du composite entrelacé comprend des éléments de remplacement remplaçant un certain nombre des éléments de chaîne, dans lesquels les éléments de remplacement comprennent des matériaux non oléfiniques qui ont une composition chimique différente de celle des couches superficielles des bandes polymériques, de sorte à fournir des capacités d'adhérence renforcées dans la surface extérieure du composite et, ainsi, faciliter la liaison avec d'autres matériaux.

8. Composite entrelacé selon la revendication 7, dans lequel les éléments de remplacement ont un point de ramollissement différent d'au moins 10°C des couches superficielles des bandes polymériques.

9. Composite entrelacé selon la revendication 7, dans lequel les éléments de remplacement sont choisis dans le groupe constitué par des éléments de ruban, des fibres monofilaments et des fils multifilaments.

10. Composite entrelacé selon la revendication 7, dans lequel les éléments de remplacement comprennent des fils multifilaments pare-balles.
